Europäisches Patentamt

European Patent Office

Office européen des brevets

(11) Publication number: **0 414 118 A1**

# EUROPEAN PATENT APPLICATION

(21) Application number: 90115648.9

(22) Date of filing: 16.08.90

(51) Int. Cl.5: **H01M 4/20**, H01M 10/06

(30) Priority: 21.08.89 US 396555

(43) Date of publication of application:
27.02.91 Bulletin 91/09

(84) Designated Contracting States:
AT BE CH DE FR GB IT LI NL SE

(71) Applicant: WIRTZ MANUFACTURING
COMPANY, INC.
1105 24th Street
Port Huron Michigan 48061-0098(US)

(72) Inventor: Yanik, David
3250 Hickory Lane
Port Huron, Michigan(US)

(74) Representative: Blumbach Weser Bergen
Kramer Zwirner Hoffmann Patentanwälte
Sonnenberger Strasse 100
D-6200 Wiesbaden 1(DE)

(54) Beltless battery grid pasting machine.

(57) A battery grid pasting machine (8) with a paste hopper (14) having an orifice plate (16) at the bottom, and a lower paste feed box (12) beneath the hopper (14) having an orifice plate (16) at the top. The orifice plates (16,30) define a clearance passage (32) through which grid panels are advanced by feed rollers (36,38). Paste in the hopper (14) is fed downwardly through registering slots (40,48) in both orifice plates (16,30) by a hopper feed roller (36). A back-up roller and a reserve paste reservoir in the lower paste feed box (12) cooperate with the feed roller (36) in applying paste to both sides of a grid advanced through the clearance passage (32). The lower paste feed box (12) can be raised or lowered to adjust the vertical dimension of the clearance passage (32). The hopper feed roller (52,66) and back-up roller (150) have knurled peripheries provided by preferably a diamond pattern of crossing grooves. A top grid drive roller is mounted on a pivoted bracket (84) which is biased to force the drive roller into pressure contact with the tops of the grids.

FIG.1

## BELTLESS BATTERY GRID PASTING MACHINE

This invention relates to a battery grid pasting machine.

## BACKGROUND

Machines for applying electrochemically active paste on lead battery grids generally have been of two types. In one type, the grids are fed on a belt conveyor beneath a paste hopper. Such a belt type machine is shown in U.S. Patent 4,606,383. In the other type, the grids are advanced through the pasting mechanism by feed rolls. Such feed roller type machines are shown in U.S. Patents 2,375,424, 2,840,120, 2,949,940 and 3,866,569.

In both types of machines, great difficulty has been experienced in trying to overpaste both sides or faces of the grids, achieve uniform thickness of the layer of paste and avoid distortion of the relatively thin and soft lead grids. In an overpasted grid the thickness of the layer of paste is greater than the thickness of the lead grid and the side faces of the grid are encased in the paste layer.

## SUMMARY

In accordance with the battery pasting machine more specifically described hereinafter, a lower paste feed box is provided beneath the paste hopper. The lower paste feed box has an orifice plate spaced beneath the hopper orifice plate to provide a clearance passage for the grids to be pasted. The orifice plates have registering slots, and means in the hopper including a hopper feed roller are provided for feeding paste downwardly through the slot in the hopper orifice plate and through the grid. A back-up roller is mounted in the lower paste feed box beneath the slot in the lower paste feed box orifice plate to cooperate with the hopper feed roller in applying paste from the hopper to both sides of a grid advanced through the clearance passage between the orifice plates. Preferably, both the hopper feed roller and the back-up roller have cylindrical surfaces which are knurled in a diamond pattern of diagonal crossing grooves. The knurling on the periphery on the hopper roller is desirable to drive or feed the paste downwardly through the slot and the grid. The back-up roller creates upward pressure on the paste to float the grid in the paste layer without requiring a continuous supply of additional paste, and the diamond knurling in conjunction with the tapered surfaces adjoining the down-stream side of the lower orifice plate accomplishes this without pulling paste away from the grid. The close proximity of the trailing edges of the lower paste feed box orifice plate slots to the back-up roller periphery prevents bleed-through and insures the necessary pressure required for pasting the underside of the plate.

The width of slots in the lower paste feed box orifice plate is kept small so as to prevent the grid structure from collapsing into it. Also, the lower orifice plate slots are preferably positioned slightly downstream from the upper orifice plate slots to more readily receive paste through a natural flow process.

The hopper feed roller is in close proximity to the trailing edges of the upper orifice plate slots to insure that the paste is lifted from the roller and passes through the slots rather than simply recirculating back to the hopper, thereby providing adequate paste delivery.

Preferably, to change the thickness of the paste layer the lower paste feed box can be moved relative to the hopper to change the extent of the clearance, or spacing between the orifice plates. The means for varying the thickness is such that uniform thickness is maintained across the full width of the plate without requiring additional adjustment of the machine, that is, one simple adjustment changes the thickness. Preferably, to rapidly feed the grids without jamming or distorting them, the grids are driven by a pair of yieldably biased feed rollers and preferably are restrained by a yieldably biased hold down roller.

Objects, features and advantages of this invention are to provide a feed roller pasting machine which effectively overpastes battery grids, produces a uniform layer of paste, avoids distortion and minimizes jamming of grids, operates at high speeds, permits varying the thickness of the paste layer, minimizes wasting of paste, and is rugged, durable, of economical manufacture, assembly and operation and of relatively simple design.

These and other objects of the invention will become more apparent as the following description proceeds, especially when considered with the accompanying drawings.

## BRIEF DESCRIPTION OF THE DRAWINGS

Figure 1 is a side view of a battery grid pasting machine constructed in accordance with this invention.

Figure 2 is an end view of the battery grid pasting machine as viewed from the right in Figure 1.

Figure 3 is an enlargement of portions of the machine shown in Figure 1.

Figure 4 is a further enlargement of portions of Figure 3, shown in section.

Figure 5 is an enlargement of a portion of Figure 4 shown within the circle 5.

Figure 6 is an enlargement of a portion of Figure 4 shown within the circle 6.

Figure 7 is a fragmentary view taken on the line 7--7 in Figure 4.

Figure 8 is a fragmentary view taken on the line 8--8 in Figure 4.

Figure 9 is an enlargement of the pivoted top entry roller assembly shown in Figures 1 and 3.

Figure 10 is an enlarged view of a roller used with the grid feeding conveyor shown in Figures 1 and 3.

Figure 11 is a top view of the lower paste feed box, in section.

Figure 12 is a sectional view taken on the line 12--12 in Figure 11.

Referring more particularly to the drawings, the battery grid pasting machine 8 comprises a frame 10 supporting a lowr paste feed box 12 and a past hopper 14 above the lower paste feed box 12.

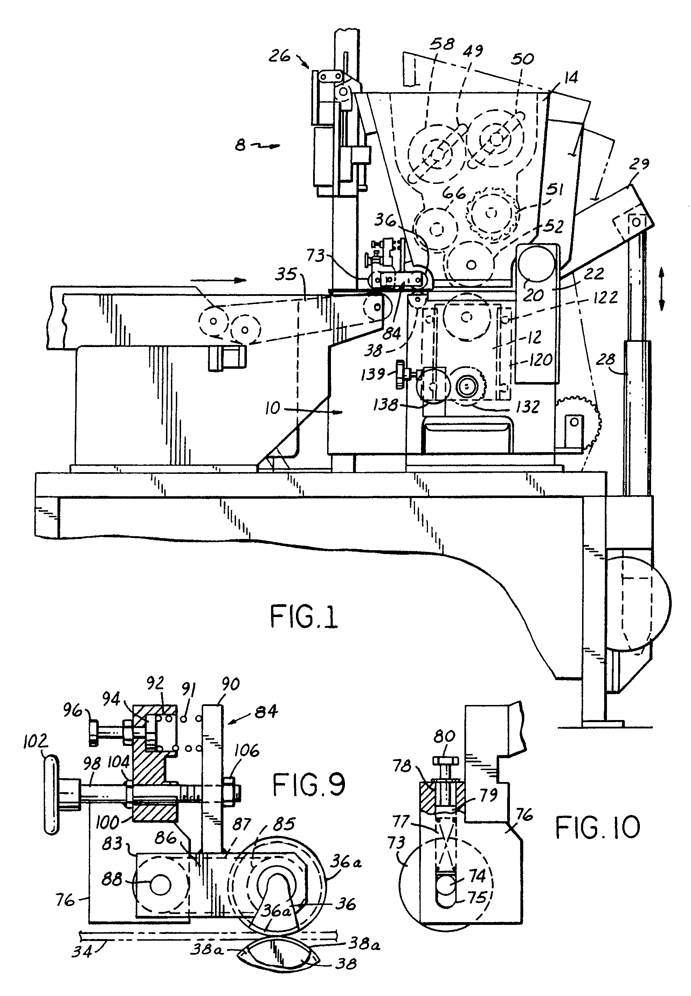

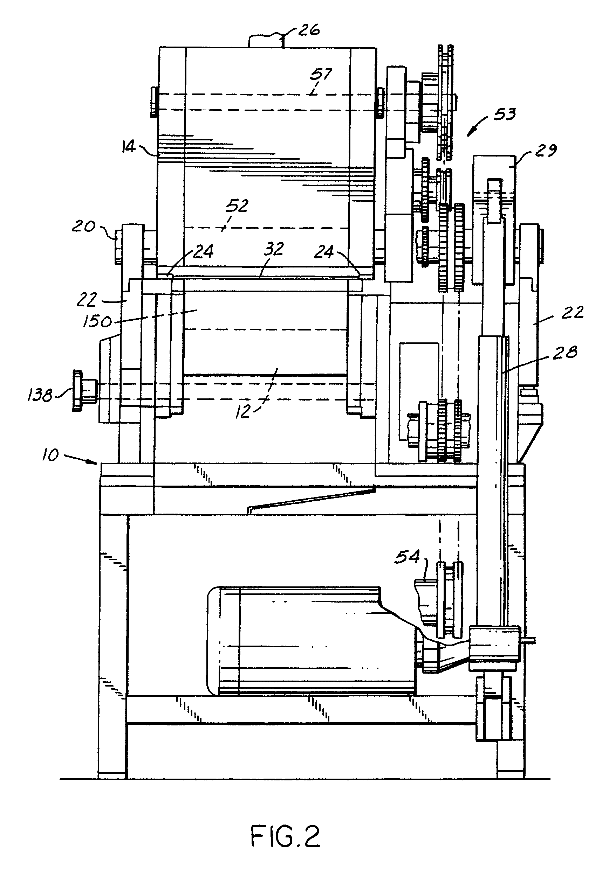

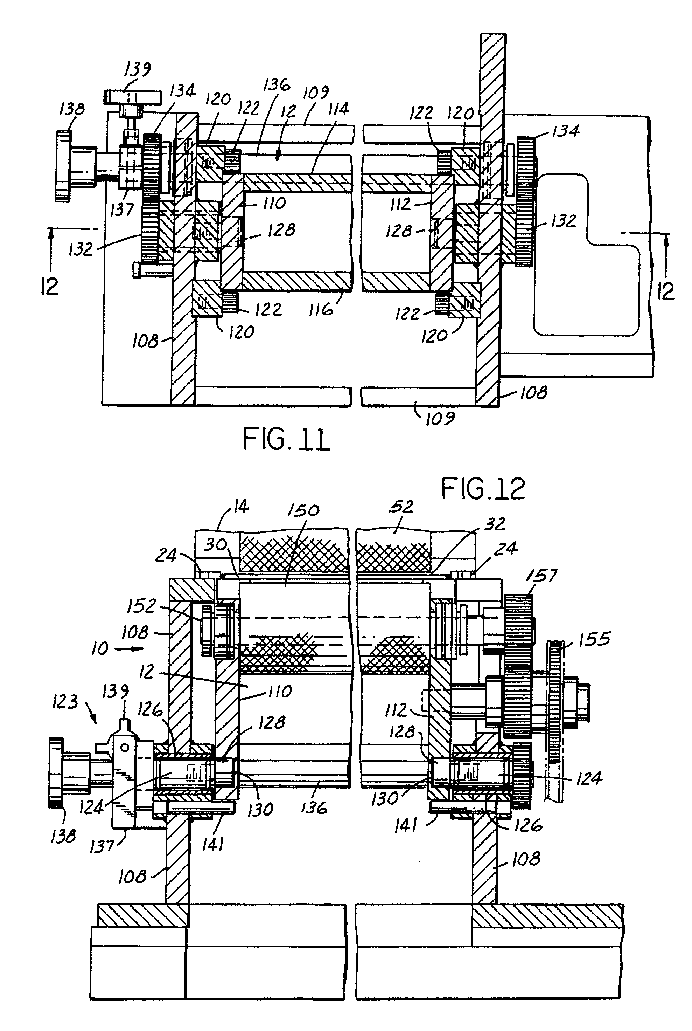

The hopper 14 is an open top vessel for containing a supply of electrochemically active paste for application to battery grids. The bottom of the hopper 14 is closed by an orifice plate 16 secured to the hopper by bolts 18. The hopper 14 is mounted for pivotal movement on a horizontal shaft 20 journaled in bearings carried by frame supports 22. When in the upright position shown in Fig. 1, the hopper 14 is supported on rests 24 (Figs. 2 and 12) carried by the frame 10 in its operative position in which orifice plate 16 is generally horizontal. A releasable latch mechanism 26 retains the hopper upright in its operative position. When the latch mechanism 26 is released, the hopper may be tilted to the dotted line positions shown in Fig. 1 by a power unit 28 pivoted to an arm 29 fixed to the shaft 20.

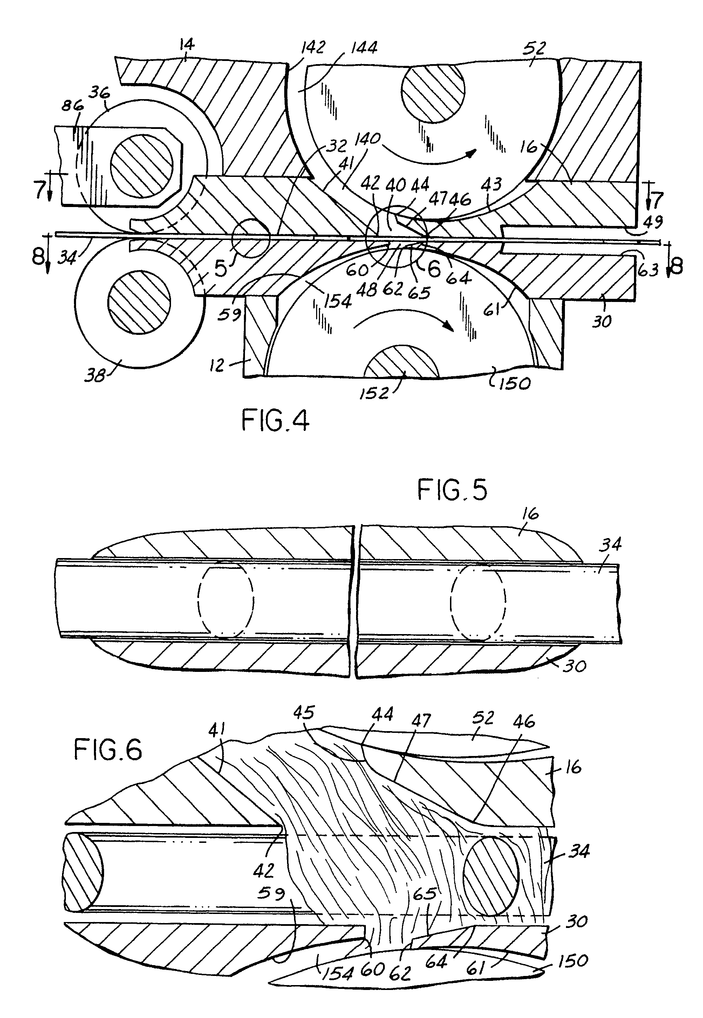

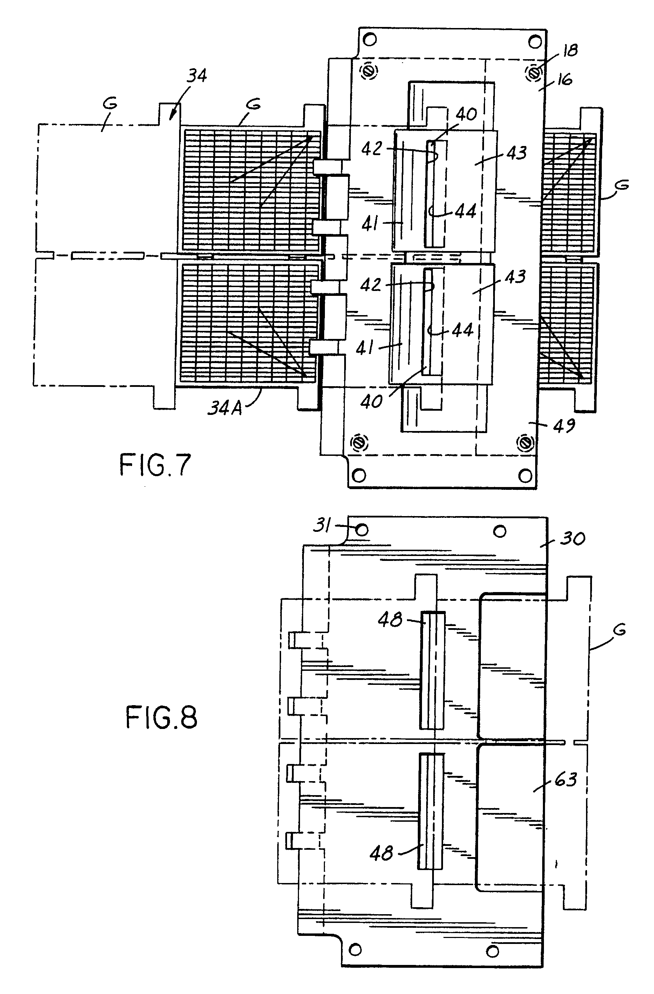

The lower paste feed box 12 is a vessel for receiving and pressurizing paste employed in the pasting operation. The top of the lower paste feed box 12 is closed by a generally horizontal orifice plate 30 secured to the lower paste feed box 12 by bolts 31 (Fig. 8). As shown in Fig. 4, the lower paste feed box orifice plate 30 is spaced below and parallel to the hopper orifice plate 16 to provide a clearance passage 32 between the plates. The vertical dimension of clearance passage 32 is slightly greater than the thickness of a grid to be pasted. The horizontal dimension of the clearance passage 32 in the direction transversely of grid travel is at least slightly greater than the width of a grid.

The grids to be pasted are identified by the reference character G. As shown in Fig. 7, each grid is formed as part of a panel 34 consisting of two grids G integrally conneoted together preferably foot to foot. These grid panels are fed through the clearance passage 32 between the orifice plates 16 and 30 by a conveyor 35 and upper and lower entry feed rolls 36 and 38. Each grid G has a relatively thick or heavy frame 34a surrounding a thinner lattice of crossing elements of non-uniform cross-section.

As shown in Fig. 7, the hopper orifice plate 16 has two elongated, narrow slots 40 which are disposed end-to-end crosswise of the path of movement of the grid panels 34 through the clearance passage 32. One slot 40 is in the path of one grid G of each panel 34 and the other slot 40 is in the path of the other grid G. The transverse dimension or length of each slot 40 approximates and is preferably slightly less than the corresponding dimension of the mesh inside the grid frames 34a, as seen in Fig. 7.

The top of the hopper orifice plate 16 on the lead side of the slots 40 (Fig. 4) has surfaces 41 tapered downwardly in the direction of grid travel through the clearance passage to the leading edges 42 of the slots 40. The top of the orifice plate 16 at the trailing side of the slots 40 has concave arcuate surfaces 43 extending to the upper margin 44 of the trailing edges 45 of the slots. The trailing edges 45 of the slots 40 also have lower margins 46 connected to the upper margins 44 by the surfaces 47 which taper downwardly in the direction of travel of the grids through the clearance passage 32. The bottom of the orifice plate 16 defines the top of the clearance passage 32 and is a flat surface except for the recess 49 at the trailing end which provides clearance for pasted grids. The portion of this flat surface which is downstream of slots 40 may be referred to as a troweling surface.

The lower paste feed box orifice plate 30 also has two elongated, narrow slots 48 which are arranged end-to-end crosswise of the direction of travel of the grid panels 34 through the clearance passage 32, and, like slots 40, are in the paths of the grids G of each panel 34. Also, like slots 40, the transverse dimension of each slot 48 approximates and preferably is slightly less than the corresponding dimension of the mesh inside the grid frames 34a. The two slots 48 in the lower paste feed box plate 30 register with and are positioned beneath and slightly downstream (see Fig. 4) of the two slots 40 in the hopper orifice plate 16. The slots 48 are kept at a minimum width to provide maximum support for the grid panels 34 which are pushed through the clearance passage 32 and might collapse into the slots 48 if not supported adequately.

The bottom of the lower paste feed box orifice plate 30 on the lead side of the slots 48 has concave arcuate surfaces 59 extending to the leading edges 60 of slots 48. The bottom of the orifice plate 30 at the trailing side of the slots 48 has concave arcuate surfaces 61 extending to the lower margins of the trailing edges 62 of the slots 48. The trailing edges 62 also have upper margins 64 connected to the lower margins 62 by an inclined surface 65. The bottom of the clearance passage 32 is defined by the top of the lower paste feed box orifice plate 30 which surface is flat except for the recess 63 along the trailing end which provides clearance for pasted grids. The portion of this flat surface which is downstream of slots 48 may be referred to as a troweling surface.

Paste in the hopper 14 is fed downwardly through the slots 40 in the hopper orifice plate 16 by paddles 49 and 50, cog roller 51 and hopper feed rollers 52 and 66, all of which are rotated by a suitable drive mechanism indicated generally at 53 in Fig. 2. The drive mechanism 53 is shown diagrammatically and has a power output shaft 54 which by means of gears, sprockets and chains drives the horizontal shafts 55, 56, 57 and 67 on which the hopper feed rollers 52 and 66, cog roller 61 and paddles 49 and 50 are mounted. The shafts for paddles 49 and 50 are connected by gearing 58 so that paddle 49 is rotated in a direction opposite to the direction of rotation of paddle 50. Similarly, the shafts for hopper feed rollers 52 and 66 are also connected by gearing 58 so that they rotate in opposite directions.

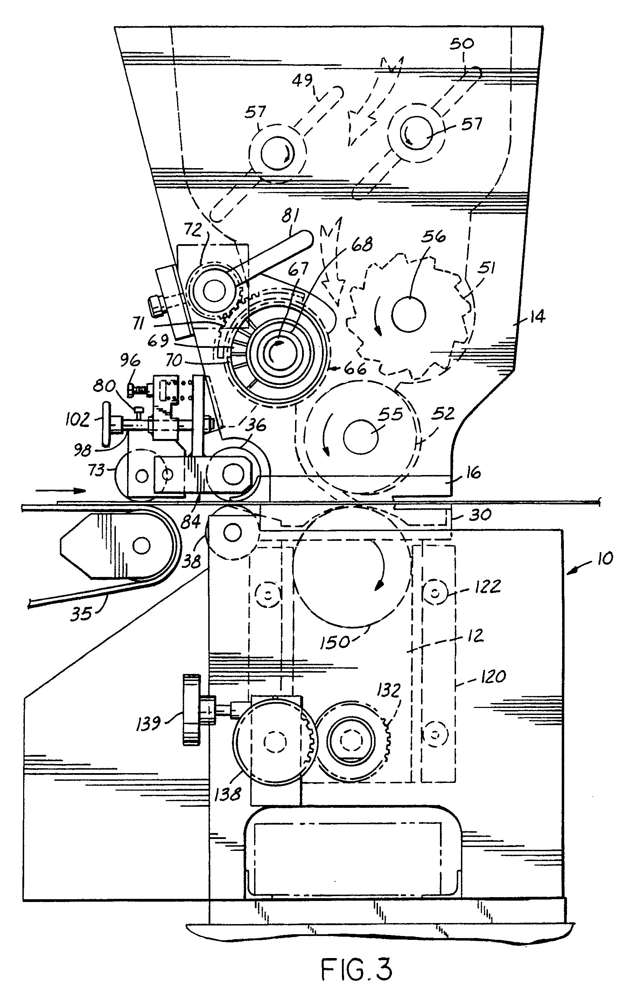

The quantity of paste delivered to the orifice slots 40 can be varied by the adjustable driven roller 66 positioned in the hopper 14. The shaft 67 for roller 66 is mounted for rotation in bearings 68 carried by adjusting rings 69 on opposite sides of the hopper. Only one adjusting ring 69 is shown in Fig. 3. Each ring 69 rotates in a circular retainer 70 and has a gear 71 in mesh with a gear 72 that can be manually rotated by handle 83 to adjust the rotative position of the adjusting ring 69. The adjusting rings 69 have eccentric internal cylindrical surfaces supporting the bearings 68 for the shaft of roller 66. Roller 66 cooperates with feed roller 52 to define a space which can be narrowed or widened by rotation of the adjusting rings 69 to vary the quantity of paste delivered to the orifice slots 40. The quantity of paste delivered can also be varied by adjusting the hopper speed in relation to grid panel feed speed.

The hopper feed roller 52 is longer than the overall length of the orifice plate slots 40 and extends across the hopper 14 from one end to the other (Fig. 12). The horizontal shaft 55 on which the hopper feed roller 52 is mounted is located above and extends parallel to the slots 40 in the hopper orifice plate 16. The radius of roller 52 is smaller than the radius of the concave surfaces 43 in the hopper orifice plate 16. In operation, the trailing edges 45 of the slots 40 lift paste from the feed roller 52 and direct it through the slot 40. Thus, preferably the peripheral surface of roller 52 is in close proximity (prefereably a clearance of 0 - 0.076 mm (0.000 - 0.003$''$) to the concave surfaces 43 of the orifice plate 16 along the upper margins 44 of the trailing edges of the slots 40. The feed roller 52 feeds paste downwardly through the passage 140 between the roller periphery and the surface 41 on the hopper orifice plate 16 and then through the sloth 40 and into the grids. The interior of the hopper has a wall 142 spaced from the roller periphery to provide an extension 144 of the passage 140. Preferably, this walla 142 extends for the full length of the roller.

A back-up roller 150 is mounted in the lower paste feed box 12 on a horizontal shaft 152 the ends of which are journaled for rotation by bearings in the side walls 110, 112 of the lower paste feed box 12. The back-up roller 150 is at least slightly longer than the overall length of the orifice plate slots 48 and extends across the lower paste feed box 12 from one side to the other in parallel relation to the slots 48 in the lower paste feed box orifice plate 30 (Fig. 12). The radius of back-up roller 150 is smaller than the radius of concave surfaces 59 and 61 in the lower paste feed box orifice plate 30. In operation, the trailing edges 62 of the slots 48 lift paste from the back-up roller 150 and direct it toward the grids. Thus, preferably the back-up roller 150 is supported below the slots 48 in the lower paste feed box orifice plate 30 with its periphery in close proximity, preferably the same clearance as set forth in the previous paragraph for roller 52, to the concave surfaces 61 of the lower paste feed box orifice plate 30 along the lower margins of the trailing edges 62 of the slots 48. Preferably, to facilitate a uniform application of paste and overpasting there is a reserve space 154 for paste between the roller periphery and the concave surfaces 59 on the bottom of the lower paste feed box orifice plate 30 which is relatively narrow adjacent to the leading edges 60 of the slots 48 and widens in a direction away from the leading edges 60. The back-up roller 150 is driven by the drive mechanism 53 including the sprocket 155 and gearing 157.

This reserve space 154 is believed to facilitate a pressure buildup on the paste and a more uniform pressure distribution on the paste in the clearance slot 32. Regardless of the roller 150, paste lift edges 62 and paste reserve space 154 greatly improves pasting and particularly overpasting of grids and greatly reduces the wasting of paste.

Hopper paste feed rate is adjusted such that slightly more paste is delivered to the grid than is required to fill its structure. This slight excess is accumulated as a "heel" in the reserve space 154 between the roller periphery and the concave surface 59 of the lower paste feed box orifice plate 30. The rotation of the back-up roller 150 continuously urges the paste forward and upward (in conjunction with the trailing edges 62 of the slots 48 in the lower orifice plate 30) against the underside of the grid structure, thereby lifting it from sliding engagement with the upper (troweling) surface of the lower paste feed box orifice plate 30 and causing paste to be applied to the underside of the grid (overpaste).

The reserve paste supply 154 absorbs the continuous changes in paste volume requirements caused by the non-uniform grid structure and insures uniform paste application to the underside of the grid.

As a possible explanation of this, it is believed that due to the non-uniform structure of grids G (i.e. heavy frame 34a surrounding smaller lattice of non-uniform cross-section), a constant delivery of paste adequate to fill the grid lattice area with the smallest cross-section will provide too much paste in areas of greater cross-section lattice and even more so in the frame area where only enough paste to cover the frame 34a is required. By adjusting the hopper paste delivery such that an amount equal to the average volume requirement for each grid is constantly provided and then allowing the paste to be stored in the lower paste feed box "reserve zone" or space 154 when the portion of grid structure of less than average pasteable volume is being passed through the pasting zone and then drawing on this reserve when grid structure of greater pasteable volume is passing through the paste zone, the plates 16, 30 will be uniformly filled with paste.

Without having the reserve zone 154 to accumulate paste for these varying demands of grid fill, the machine would have to be set at a delivery rate for the higher paste volume requirement and then when the grid structure of lower paste volume requirement passes through the paste zone, the excess paste bleeds out either side of the grid passageway at the pasting zone and accumulates outside the grid frame structure and upon the grid lugs which is quite undesireablee and must be removed with subsequent processing.

By changing the speed of the back-up roller 150, the rate of paste delivery from the reserve zone 154 can be changed.

The hopper feed roller 52 has a diamond knurled peripheral surface formed by crossing grooves extending preferably diagonally with respect to the longitudinal axis of the rolls, in a diamond pattern. The peripheral surface of the back-up roller 150 is similarly formed with diamond knurling provided by diagonal crossing grooves in a diamond pattern. The two rollers 52 and 150 rotating in the direction of the arrows in Fig. 4 apply a coating of paste on opposite sides of a grid panel 34 as it moves through the clearance passage 32. Preferably they overpaste both sides of the grid panel 34.

The diamond knurled surfaces of the hopper paste feed roller 52 and lower paste feed box back-up roller 150 are ground to insure precise dimensional control of these surfaces. The diamond surface knurling provides excellent friction for driving the paste forward, yet minimizes paste bleedthrough between the trailing edges 45, 62 of the slots 40, 48 in the orifice plates 16, 30 and the roller periphery. This ensures that the paste is driven forward to the pasting zone and not by-passed between the periphery of the roller and the concave surface of the orifice plate adjoining the trailing edges of slots.

The upper and lower orifice plate trowel surfaces 49, 63 are in such length as to provide a smooth finished pasted plate yet keep friction to a minimum to enable pasting grid types used in today's batteries, which are thinner and use softer alloys than in years past.

To permit varying the vertical extent of the clearance between the orifice plates (16, 30), the lower paste feed box 12 is mounted for vertical sliding movement between the side walls 108 of the frame 10. The side walls 108 are connected by spacers 109. The lower paste feed box 12 is open at the top and is of generally rectangular shape having the two side walls 110, 112, and the two end walls 114, 116. As shown in Fig. 11, the lower paste feed box 12 is guided in its vertical movement by vertical guideways 120 mounted on frame side walls 108 adjacent the four corners of the lower paste feed box 12. Preferably, the guideways 120 are recessed to receive the corners of the lower paste feed box 12 and are provided with rollers 122 engaging opposite ends of the lower paste feed box 12.

The lower paste feed box 12 can be adjusted vertically by a mechanism 123 which includes aligned eccentric cam shafts 124 supported for rotation in bearing sleeves 126 mounted in opposite side walls 108 of the frame. Each cam shaft 124 has a cam follower 128 which is a circular roller mounted in a hole in the cam shaft offset from the axis of the cam shaft. The cam followers 128 fit into recesses 130 in the end walls 110, 112 of the lower paste feed box 12. It will be apparent that rotation of the cam shaft 124 will effect a vertical adjustment of the lower paste feed box 12.

Each cam shaft 124 has a gear 132 on its outer end in mesh with a second gear 134 on a through shaft 136. The through shaft 136 is rotated by an adjusting handle 138 to raise or lower the lower paste feed box 12 to the desired position through the gears 132, 134, eccentric cam shafts 124, and cam followers 128. A releasable clamp 137 mounted on a wall 108 of the frame 10 embraces shaft 136 to lock the shaft 136 against rotation when tightened by the screw 139. To provide a lower limit of movement of the lower paste feed box 12, dowel pins 141 are secured to the frame 10 in fixed positions beneath the lower paste feed box 12.

The conveyor 35 is driven by suitable means not shown and supplies grid panels 34 in sequence in the direction of the arrow in Figs. 1 and 3 to the nip of the feed rollers 36, 38 which propel the grid panels through the clearance passage 32 between the hopper orifice plate 16 and the lower paste feed box orifice plate 30. The conveyor 35 terminates at a point just short of the clearance passage. In order to prevent the grid panels from popping up and jamming as they leave the conveyor, an idler or grid retainer roller 73 (Figs. 3 and 10) is rotatably mounted by bearings on a through shaft 74 extending into vertically elongated slots 75 in a fixed supporting frame 76 with compression coil springs 77 urging the roller downwardly into contact with the grid panels. The springs 77 are mounted in bores 78 formed in the supporting frame 76 and bear at one end on the bearing blocks engaging the through shaft 74 of the roller 73 and at the other end against an adjustable abutment 79 to vary the amount of compression of the springs. This abutment 79 can be raised and lowered by a manually operable threaded member 80 which threads through the supporting frame 76 and into engagement with the abutment.

At the entrance to the clearance passage 32 and just beyond the discharge end of the conveyor 35 are the top entry roller 36 and bottom entry roller 38, boeth of which are powered by the drive mechanism 53. The bottom entry roller 38 is journaled for rotation on the lower paste feed box 12. The top entry roller 36 is carried by a pivoted bracket 84 (Fig. 9). The bracket 84 has a pair of spaced apart first arms 86 pivoted near one end to the supporting frame 76 on a shaft 88. The top entry roller 36 is journaled for rotation near the opposite end of arms 86 in a position directly above the bottom entry roller 38. The drive of the top entry roller 36 includes the sprocket 83 on the pivot shaft 88, a sprocket 85 mounted on roller 36, and a chain 87 connecting the sprockets.

The bracket 84 has a second arm 90 extending generally vertically upwardly from the first arms. The compression coil spring 91 bears again the upper end of this second arm 90 to urge bracket 84 clockwise in Figs. 3 and 9, thereby urging top entry roller 36 downward for contact with the upper surfaces of the grid panels. The spring 91 has one end disposed in a socket 92 of the frame 76 which bears against an adjustable abutment 94 in the socket. The abutment 94 is adjusted by a screw 96 threaded in the frame 76 and bearing against the abutment 94 to vary the compression of the spring.

The limit of clockwise movement of the bracket 84 is determined by a threaded rod 98 engaged in a threaded hole through the second arm 90. This rod extends loosely through a clearance hole 100 in the supporting frame 76 and has a knob 102 fixed to its other end. A fixed stop 104 on the rod 98 is engageable with the supporting frame 76 and a lock-nut 106 is threaded on the other end of the rod. The limit of clockwise rotation of the bracket can be adjusted by turning the knob 102 to rotate the rod 98.

Spacer gage rolls 36a and 38a are mounted near each end of the grid feed rollers 36 and 38. The peripheries of spacer gage rolls 36a on roller 36 engage the peripheries of space gage rolls 38a on roller 38 to accurately control the minimum vertical clearance between rollers 36 and 38. These gage rolls are a means to easily and conveniently insure proper clearance between the feed rolls which will permit the grids to be fed into them with minimal vertical displacement of the upper feed roller. This is especially important for jam-free operation at higher speeds.

In operation, the grid panels are engaged by the entry feed rollers 36 and 38 before they leave the conveyor 35 and are advanced through the clearance passage 32. During this movement of the grid panels 34 through the clearance passage, paste in the hopper 14 is fed downwardly through the slots 40 in the hopper orifice plate 16. The hopper feed roller 52 is power rotated in the direction of the arrow to drive the paste downwardly through the passage 140 and through the slots 40. The back-up roller 150 is power rotated in the opposite direction, which creates a counter-pressure on paste which has been forced downwardly into the lower paste feed box orifice slots 48 and space 154 to float the grid panels 34 between the orifice plates 16 and 30 to thereby insure application of paste on both sides of the grid panel 34.

The knurling on the periphery of the hopper feed roller 52 is helpful in driving the paste downwardly through slots 40. The knurling on the back-up roller 150 increases the counter-pressure of paste against the bottom on the grid panel 34 without requiring a continuous supply of excess paste, and without pulling paste away from the grid panel 34. With this construction paste is lifted from the back-up roller 150 by the trailing edges 62 of the slots 48 and thereby retained in the slots 48 and space 154. Hence it is unnecessary to continuously supply excess paste to the lower paste feed box 12. This substantially decreases the wasting of paste when applying it to grid panels 34.

The surface speed of grid panels 34 moving through the clearance space 32 is usually about 22.86 to 36.75 m (75 to 120 linear feet) per minute. The peripheral or surface speed of the hopper feed roller 52 is usually about 30 to 100 %, and preferably about 50 to 80 % of the surface speed of the grid panels through the clearance passage 32. The surface speed of the back-up roller 150 in the lower paste feed box 12 is usually about 30 to 150 % and preferably about 80 to 120 % greater than the surface speed of the hopper feed roller 52.

The thickness of the layer of paste on the grid panel 34 can be varied by adjusting the lower paste feed box 12 up or down, thereby increasing or decreasing the vertical dimension of the clearance passage 32. Preferably, both faces of the grid panels 34 are overpasted by applying a paste layer having a total thickness which is usually about 0.2 to 0.76 mm (0.008 to 0.030 of an inch) thicker than the grid panels 34.

Runs of grid panels 34 of varying thickness can be pasted by this machine. Battery grids usually have a thickness of about 1 to 3.2 mm (0.040 to 0.125 inches). Grids for automobile batteries usually have a thickness of about 1 to 2 mm (0.040 to 0.080 inches) and for golf cart batteries about 1.8 to 3.2 mm (0.070 to 0.125 inches).

## Claims

1. A battery grid pasting machine comprising a paste hopper (14),
a lower paste feed box (12) beneath said paste hopper (14),
said paste hopper (14) having a hopper orifice plate (16),
said lower paste feed box (12) having a lower paste feed box orifice plate (30) spaced below said hopper orifice plate (16) to provide a clearance passage (32) between said plates (16, 30) at least about 0.2 mm (0.008 of an inch) greater than the thickness of the grid (G) to be pasted and extending generally horizontally,
means for advancing grids (G) in a generally horizontal plane in one direction through the clearance passage (32) between said plates (16, 30),
said plates (16, 30) having orifice slots (40, 48) in substantial register with one another,
means in said hopper (14) for feeding paste downwardly through said slot (40) in said hopper orifice plate (16) including a hopper feed roller (52) mounted above said slot (40) in said hopper orifice plate (16) for rotation on a generally horizontal axis (55),
the peripheral surface of said hopper feed roller (52) being spaced above the bottom surface of said hopper orifice plate (16),
a back-up roller (150) in said lower paste feed box (12) beneath the slot (48) in said lower paste feed box orifice plate (30) mounted for rotation on a generally horizontal axis (152) to cooperate with said hopper feed roller (52) in applying paste from said hopper (14) to both sides of a grid (G) advanced generally horizontally through the clearance passage (32) between said-plates (16, 30),
the peripheral surface of said back-up roller (150) being spaced below the top surface of said lower paste feed box orifice plate (16),
means for rotating said back-up roller (150) in a direction such that its upper peripheral surface moves in the same direction as the advancing grids (G),
said slots (48) in said lower paste feed box orifice plate (30) having leading (60) and trailing (62) edges relative to the direction of advance of said grids,
said trailing edge (62) being immediately adjacent to and in a position to lift paste from the peripheral surface of said back-up roller (150),
the minimum clearance between said trailing edge (62) and said peripheral surface of said back-up roller (150) being about 0 to 0.076 mm (0.000 to 0.003 of an inch), and
said leading edge (60) of said slot (48) in said lower paste feed box orifice plate (30) is spaced from said back-up roller (150) and the undersurface of said lower paste feed box orifice plate (30) extends from said leading edge (60) in spaced relation to said back-up roller (150) to provide a reserve space (154) for paste, which is urged by rotation of said back-up roller (150) toward said slot (48) in said lower paste feed box orifice plate (80) and toward a grid (G) between said slots (40, 48) in said plate (16, 30).

2. A battery grid pasting machine as defined in claim 1, wherein said back-up roller (150) has a knurled peripheral surface.

3. A battery grid pasting machine as defined in claim 1, wherein said reserve space (154) is relatively narrow adjacent to said leading edge (60) and gradually widens from said leading edge (60) around a portion of the periphery of said back-up roller (150).

4. A battery grid pasting machine as defined in claim 3, wherein said undersurface of said lower paste feed box orifice plate (30) extends from said leading edge (60) in an arc (59) of greater radius than said back-up roller (150).

5. A battery grid pasting machine as defined in claim 4, wherein said slot (40) in said hopper orifice plate (16) has leading (42) and trailing (45) edges relative to the direction of advance of said grids (G), said trailing edge (45) of said slot (40) in said hopper orifice plate (16) being immediately adjacent to and in a position to lift paste from the peripheral surface of said hopper feed roller (52).

6. A battery grid pasting machine as defined in claim 5, wherein said trailing edge (62) of said slot (48) in said lower paste feed box orifice plate (30) is in close proximity to the peripheral surface of said back-up roller (150), and said trailing edge (45) of said slot (40) in said hopper orifice plate (16) is in close proximity to the peripheral surface of said hopper feed roller (52).

7. A battery grid pasting machine as defined in claim 1, wherein said means for advancing grids along a path through said clearance passage (32) comprises an upper entry roller (30) above the path of said grids at the entrance to said passage (32), a bracket (84) rotatably mounting said upper entry roller (36), means supporting said bracket (84) for pivotal movement in opposite directions causing said upper entry roller (36) to move toward and away from said path, and resilient means urging said bracket (84) in one direction causing movement of said upper entry roller (36) toward said path.

8. A battery grid pasting machine as defined in claim 7, wherein said means for advancing grids includes a lower entry roller (38) beneath said upper entry roller (36), and means (53) for driving said upper entry (36) and lower entry rollers (38).

9. A battery grid pasting machine as defined in claim 8, wherein said bracket (84) has a first arm (86) to which said upper entry roller (36) is rotatably mounted near one end thereof and to the opposite end of which said bracket (84) is pivoted to said bracket supporting means, said bracket (84) having a second arm (90) at a sustantial angle to said first arm (86), a fixed support (76) , and said resilient means comprises a spring (91) between said fixed support (76) and said second arm (90).

10. A battery grid pasting machine as defined in claim 1, including means for raising and lowering said lower paste feed box (12) relative to said paste hopper (14) to vary and adjust the height of the clearance passage (12) between said plates (16, 30).

11. A battery grid pasting machine as defined in claim 1, wherein said means for rotating said back-up roller (150) rotates said back-up roller (150) at a peripheral surface speed which is at least about 30 % greater than the peripheral surface speed of said hopper feed roller (52).

12. A battery grid pasting machine as defined in claim 11 including means for rotating said hopper feed roller (52) at a peripheral surface speed which is at least about 30 % of the surface speed of the grid panels advanced through the clearance passage (32) between said plates (16, 30).

13. A battery grid pasting machine as defined in claim 12, wherein said means for advancing grid advances grids through the clearance passage (32) between said plates (16, 30) at a surface speed of at least about 22.86 m (75 linear feet) per minute.

FIG.1

FIG.9

FIG.10

FIG.2

FIG.3

11

FIG.4

FIG.5

FIG.6

FIG.7

FIG.8

FIG. 11

FIG.12

| DOCUMENTS CONSIDERED TO BE RELEVANT | | | EP 90115648.9 |
|---|---|---|---|

| Category | Citation of document with indication, where appropriate, of relevant passages | Relevant to claim | CLASSIFICATION OF THE APPLICATION (Int. Cl.5) |
|---|---|---|---|
| A | US - A - 1 975 039 (GOODRICH et al.) * Fig. 10 * | 1 | H 01 M 4/20 H 01 M 10/06 |
| A | US - A - 1 653 587 (RIXDORFF) * Fig. 1 * | 1 | |
| D,A | US - A - 3 866 569 (GIBSON et al.) * Fig. 1 * | 1 | |
| D,A | US - A - 2 949 940 (LOZO) * Fig. 1,8 * | 1 | |
| D,A | US - A - 2 840 120 (LUND) * Fig. 7 * | 1 | |
| D,A | US - A - 2 375 424 (LUND) * Fig. 2 * | 1 | TECHNICAL FIELDS SEARCHED (Int. Cl.5) H 01 M 4/00 |

The present search report has been drawn up for all claims

| Place of search | Date of completion of the search | Examiner |
|---|---|---|
| VIENNA | 08-11-1990 | LUX |